# EUROPEAN PATENT APPLICATION

(11) **EP 4 733 035 A1**
(43) Date of publication of application: **29.04.2026**
(21) Application number: 25208702.8
(22) Date of filing: 14.10.2025
(51) Int. Cl.: B29C 45/76, B29C 45/14

(54) **METHOD AND SYSTEM FOR ALIGNMENT OF AN INJECTION MOLDING MODULE IN RELATION TO A WEB OF PACKAGING MATERIAL**

(30) Priority: 23.10.2024 IT 202400023616
(71) Applicant: Tetra Laval Holdings & Finance S.A., 1009 Pully (CH)
(72) Inventor: RAVAZZINI, Roberto, 41123 Modena (IT); STAGLIANO, Armando, 41123 Modena (IT); BATTISTINI, Fabrizio, 41123 Modena (IT); TAVERNARI, Fabrizio, 41123 Modena (IT); GHIDDI, Gianluca, 41123 Modena (IT); VESCOVO, Federico, 41123 Modena (IT); RAGAZZI, Francesco, 41123 Modena (IT)
(74) Representative: Tetra Pak Patent Attorneys

(57) **Abstract**

A method of adjusting an alignment of an injection molding module in relation to a web of packaging material is presented. The injection molding module being configured to injection mold opening devices onto the web of packaging material. The method comprises: capturing an image of an already injection molded opening device on the web of packaging material; determining an offset of a center position of the already injection molded opening device on the web of packaging material in relation to positions of features in the web of packaging material by analyzing the captured image; and adjusting the alignment of the injection molding module in relation to the web of packaging material based on the determined offset, thereby adjusting a position of a future injection molded opening device in relation to the web of packaging material. An injection molding system for injection molding opening devices onto a web of packaging material having the above alignment functionality as well as a packaging machine comprising such injection molding system are also presented.

## Description

### Technical field

The present invention relates to alignment of an injection molding module in relation to a web of packaging material. Especially, a method of adjusting the alignment of the injection molding module in relation to the web of packaging material is presented. An injection molding system for injection molding opening devices onto a web of packaging material being set to align the opening devices in relation to the web of packaging material as well as a packaging machine comprising such an injection molding system are also presented.

### Background of the invention

Within the food industry today, the food package technology plays an important part. The food package has several important functions. Apart from branding of the product and presenting the customers with information, the food package also has an important role of ensuring food safety. The packaging materials used in the food package can be designed to provide strength and stability, so that the packages are not damaged during transportation. Furthermore, the packaging materials can form a protective environment for the food product so that it is protected from for example bacteria, germs, oxygen and sun light, thus prolonging shelf life.

In many food packages of today an opening device is present. Examples of opening devices are screw caps, flip-top caps, or spouts with sealing features. The opening devices may be molded onto the web of packaging material used to form the packages. The web of packaging material typically comprises pre-prepared perforated and/or weakened areas at which the opening devices are to be molded.

Correct orientation of an opening device on a food package is important e.g. for food safety, manufacturing, and consumer reasons. For example, a correctly oriented opening device ensures that the package is sealed tightly, preventing air, moisture, or contaminants from entering. On the other hand, an incorrectly oriented opening device can compromise the seal, leading to leakage, spoilage, or contamination of the product. For perishable items like milk or juice, a compromised seal could lead to faster spoilage and safety concerns. Further, many opening devices include tamper-evident features, such as breakable seals or rings, which give consumers confidence that the product hasn't been opened or tampered with. A misaligned opening device could damage these safety features or fail to indicate tampering properly, potentially leading to safety issues or loss of trust in the brand. Moreover, orientation of the opening device may also play a role in smooth and controlled liquid flow out from the package. Misorientation may obstruct the flow or create splashing, leading to an unsatisfactory pouring experience. Furthermore, the packages is engineered to work with the opening device at a specific location. Misalignment can stress the material of the package in ways that could weaken the package material, potentially leading to tears, leaks, or damage during handling. Further, during the packaging process, carton packages are filled and sealed in high-speed automated systems. Proper opening device orientation is essential to ensure smooth operation and prevent production delays. A misaligned opening device could cause machines to jam, slow down.

However, safeguarding correct orientation of opening devices on a food packages may be troublesome involving fine tuning of setting in the packaging machine used to produce the packages. Today, such fine tuning often involve consulting experienced from expert on the packaging machine and/or the type of packages produced by the packaging machine. For example, sample packages may be needed to be analyzed by such experienced experts in order to fine-tune the settings of the packaging machine. Hence, there is a need of improvements in adjusting an alignment of an injection molding module, used to mold the opening devices onto a web of packaging material, in relation to the web of packaging material.

### Summary of the invention

The herein disclosed technology seeks to at least partly mitigate, alleviate or eliminate one or more of the above-mentioned deficiencies and disadvantages in the prior art. In particular, it is an object to provide efficient alignment of an injection molding module in relation to a web of packaging material. Especially, to provide the alignment such that it may be implemented in high-speed automated packaging machines producing thousands of packages per hour, e.g. more than 4 000 packages per hour. The inventors of the present inventive concept has realized a new and improved way of alignment of an injection molding module in relation to a web of packaging material in connection with high speed filling of packages with food product, especially liquid food product.

Various aspects and embodiments of the disclosed invention are defined below and in the accompanying independent and dependent claims.

According to a first aspect, a method of adjusting an alignment of an injection molding module in relation to a web of packaging material is presented. The injection molding module being configured to injection mold opening devices onto the web of packaging material. The method comprises: capturing an image of an already injection molded opening device on the web of packaging material; determining an offset of a center position of the already injection molded opening device on the web of packaging material in relation to positions of features in the web of packaging material by analyzing the captured image; and adjusting the alignment of the injection molding module in relation to the web of packaging material based on the determined offset, thereby adjusting a position of a future injection molded opening device in relation to the web of packaging material.

The method allow for increase of quality of the packages. This since it is safeguarded that the opening devices are located at a correct position of the packages. Correctly positioned opening devices reduces the risk of gaps or other imperfections in connection with the opening devices. Such correctly located opening devices allow for maintaining product integrity and ensuring that the contents remain sealed until opened by the consumer.

The method is in the form of a feedback loop. This since a location at which a future injection molded opening device is to injection molded onto the web of packaging material is controlled based on a location of an already injection molded opening device.

The method also mitigates risks for the opening devices influencing settings of downstream stations in the packaging machine. This since, the opening devices will be placed where they are supposed to be on the web of packaging material. Misaligned opening devices may interact, or even damage, parts of the packaging machine.

Further, damage of the opening devices may also be avoided by implementing the present method. This since collisions between the opening devices and parts of the packaging machine may be avoided.

Moreover, further forming of the package is also facilitated since the method provide for that the opening devices are place where they are supposed to be.

Analyzing the captured image may comprise identifying crease lines of the web of packaging material as the features in the web of packaging material. This allow for aligning the opening devices in relation to crease lines. The crease lines e.g. indicating where to fold the web of packaging material to form the packages. Hence, by aligning the opening devices in relation to crease lines the location of the opening devices in the final package will be controlled. Further, location of the opening devices in relation to pre-prepared crease lines is typically made at the design phase of the packages. Hence, it is safeguarded that the opening device is located where it is supposed to be according to the design of the package.

Identifying the crease lines may comprise applying an image filter to enhance the crease lines in the image. Identifying the crease lines may further comprise applying a line-detector.

The method may further comprise determining a center of a rectangle defined by the crease lines. The offset of the center position of the already injection molded opening device on the web of packaging material in relation to features in the web of packaging material may then be set to be an offset between the center position of the already injection molded opening device on the web of packaging material and the center of the rectangle defined by the crease lines.

Analyzing the captured image may comprise identifying the center position of the already injection molded opening device by identifying a center of a circular main body of the opening device.

Adjusting the alignment of the injection molding module in relation to the web of packaging material may be performed on a condition that the offset is above a tolerance threshold. By having a tolerance, minor adjustments may be avoided. By this unnecessary correction of the web of packaging material and/or the injection molding module may be avoided.

According to a second aspect there is provided a non-transitory computer-readable storage medium having stored thereon instructions for implementing the method according to the first aspect when executed on a device having processing capabilities.

The above mentioned features and possible advantages of the first aspect, when applicable, apply to this second aspect as well. In order to avoid undue repetition, reference is made to the above.

According to a third aspect, an injection molding system for injection molding opening devices onto a web of packaging material is provided. The injection molding system comprises: an injection molding module and control circuitry. The injection molding module is configured to injection mold opening devices onto the web of packaging material. The control circuitry is configured to execute: an offset function configured to determine an offset of a center position of an already injection molded opening device on the web of packaging material in relation to positions of features in the web of packaging material by analyzing an image of an already injection molded opening device on the web of packaging material; and an adjusting function configured to adjust an alignment of the injection molding module in relation to the web of packaging material based on the determined offset. Thereby, injection molding system allow for adjusting a position of a future injection molded opening device in relation to the web of packaging material. Hence, the injection molding system is set to perform as a feedback loop. This since a location at which a future injection molded opening device is to injection molded onto the web of packaging material is controlled based on a location of an already injection molded opening device.

The injection molding system may further comprise a camera. The camera being configured to capture the image of the already injection molded opening device on the web of packaging material.

The offset function may be configured to analyze the captured image by identifying crease lines of the web of packaging material as the features in the web of packaging material.

The offset function may further be configured to apply an image filter to the image of the already injection molded opening device on the web of packaging material to enhance the crease lines and to apply a line-detector to identify the crease lines

The offset function may be configured to identify the center position of the already injection molded opening device by identifying a center of a circular main body of the opening device.

The adjusting function may be configured to adjust the alignment of the injection molding module in relation to the web of packaging material on a condition that the offset is above a tolerance threshold.

**In** addition, the above mentioned features and possible advantages of the first aspect, when applicable, apply to this third aspect as well. **In** order to avoid undue repetition, reference is made to the above.

According to a fourth aspect, a roll feed packaging machine configured to produced packages filled with food product is provided. The produced packages comprising a opening device for accessing the food product. The roll feed packaging machine comprises a feeder for feeding a web of packaging material; and an injection molding system according to the third aspect.

The roll feed packaging machine may further comprise a reel comprising the web of packaging material. The packaging material may comprise pre-prepared crease lines.

A further scope of applicability of the present disclosure will become apparent from the detailed description given below. However, it should be understood that the detailed description and specific examples, while indicating preferred variants of the present inventive concept, are given by way of illustration only, since various changes and modifications within the scope of the inventive concept will become apparent to those skilled in the art from this detailed description.

### Brief description of the drawings

The above and other aspects of the present inventive concept will now be described in more detail, with reference to appended drawings showing variants of the present inventive concept. The figures should not be considered limiting the invention to the specific variant; instead, they are used for explaining and understanding the inventive concept.

As illustrated in the figures, the sizes of layers and regions are exaggerated for illustrative purposes and, thus, are provided to illustrate the general structures of variants of the present inventive concept. Like reference numerals refer to like elements throughout.
Fig. 1 schematically illustrates, by way of example, a packaging machine in which opening devices are molded onto a web of packaging material.
Fig. 2 schematically illustrates, by way of example, an injection molding system configured to mold opening devices onto a web of packaging material.
Figs 3a and 3b schematically illustrates, by way of example, images from above of opening devices being molded onto a web of packaging material.
Fig. 4 is a block diagram of a method of adjusting an alignment of an injection molding module in relation to a web of packaging material, the injection molding module being configured to injection mold opening devices onto the web of packaging material.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

**It** will also be appreciated that when the present disclosure is described in terms of a method, it may also be embodied in an apparatus or device comprising one or more processors, one or more memories coupled to the one or more processors, where computer code is loaded to implement the method. For example, the one or more memories may store one or more computer programs that perform the steps, services and functions disclosed herein when executed by the one or more processors.

**It** is also to be understood that the terminology used herein is for the purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. **It** should be emphasized that the term "comprises/comprising" when used in this specification is taken to specify the presence of stated features, integers, steps, or components. **It** does not preclude the presence or addition of one or more other features, integers, steps, components, or groups thereof. The term "and/or" is to be interpreted as meaning "both" as well and each as an alternative. The term "obtaining" is herein to be interpreted broadly and encompasses receiving, retrieving, collecting, acquiring, and so forth.

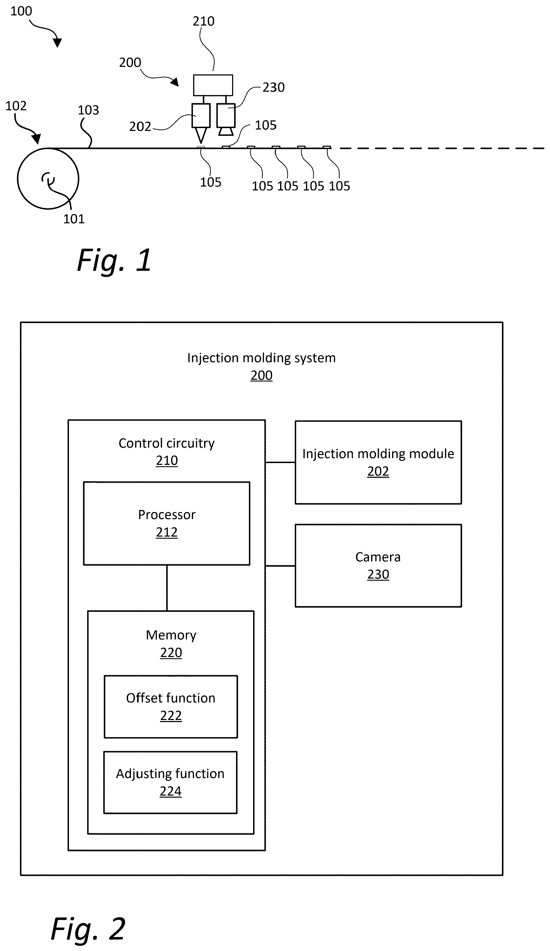

Fig. 1 generally illustrates, a packaging machine 100 configured to fill packages with a food product, typically a liquid food product. More precisely, the packaging machine 100 is a roll feed packaging machine 100. The roll feed packaging machine 100 may be used for packaging liquid food products in carton-based packages. Already in the 1940s this type of packaging machines was introduced by Tetra Pak^{®} and it is today a well-known approach for packaging milk and other liquid food products in a safe and cost-efficient manner. The roll feed packaging machine 100 is configured to form the packages from a web of packaging material 103. That is, the packaging machine 100 may be feed with the web of packaging material to be formed into packages.

For a roll-fed packaging machine 100 the packaging material is loaded onto a reel 101 before being transported. After arriving at the site, the reel 101 is placed in the packaging machine 100, and a web of packaging material 103 is fed in the packaging machine 100 by a feeder 102. The feeder 102 is configured to feed packaging material 103 within the packaging machine 100 to be formed to packages. The feeder 102 may further be configured to feed the packages formed within the packaging machine 100 to other downstream stations within the packaging machine 100. Hence, the feeder 102 may comprise a plurality of sub feed units.

The web of packaging material 103 typically comprises pre-prepared crease lines. A crease line on the web of packaging material 103 refers to a deliberately created line on the material to aid in a future folding of the packaging material to create a package from the packaging material. The crease line is a pre-prepared line, typically achieved by mechanical pressure or scoring, allowing the packaging material to fold cleanly along the line without damaging or distorting the packaging material. Hence, crease lines help ensure that the packaging material, such as paper, cardboard, plastic, or laminated film, can be formed efficiently into a specific shape, like a box or pouch. The crease lines provides a controlled folding, improving the ease of forming, ensuring structural integrity, and enhancing the visual appearance of the final package. The web of packaging material 103 may also comprise a pre-print with product information.

The web of packaging material 103 is typically in the form of a laminate. A laminated web of packaging material refers to a continuous sheet or roll of packaging material comprising multiple layers of different materials laminated together to combine their individual properties. Each layer in the laminate serves a specific function, such as providing strength, barrier protection (against moisture, oxygen, light, or contaminants), heat resistance, printability, or flexibility. Laminated webs are commonly used in flexible packaging for food. The layers are typically made from materials like paperboard, heat sealable material films (e.g., polyethylene, polypropylene), and aluminum foil. These layers are adhered using adhesives or by heat-sealing processes. The combination of layers allows laminated packaging materials to offer enhanced performance, such as extending shelf life, protecting the product from environmental factors, and ensuring the package is durable while being lightweight and easy to handle. Hence, packaging material is designed to hold and protect contents such as liquids, powders, or food items.

The packaging machine 100 is configured to apply opening devices 105 to the produced packages. The opening devices 105 are used for accessing the food product in the produced packages. The opening device may also be referred to as a spout. Examples of opening devices are screw caps, flip-top caps, or spouts with sealing features. The opening devices may be molded onto the web of packaging material 103 used to form the packages. The web of packaging material 103 typically comprises perforated and/or weakened areas at which the opening devices 105 are to be molded. The perforated and/or weakened areas may be pre-processed upon manufacturing of the web of packaging material 103. Alternatively, or in combination, the perforated and/or weakened areas may be produced in the packaging machine 100, e.g. just before molding the opening devices onto the web of packaging material 103. Locations of the perforated and/or weakened areas may be decided upon according to design of the crease lines on the web of packaging material 103.

**In** order to mold the opening devices 105 to the packaging material 103 the packaging machine 100 comprises injection molding module 202. The injection molding module 202 is configured to injection mold opening devices 105 onto the web packaging material 103. Injection molding of opening devices 105 onto a web of packaging material 103 is a manufacturing process used in industries like food and beverage packaging. This technique integrates opening device production directly onto the web of packaging material 103, creating a sealed, functional closure that allows easy opening and resealing of the package. The injection molding module 202 typically comprises a mold, an injection unit, and a clamping unit. The mold has a cavity shaped to form the opening device 105. Molten plastic is injected into the cavity to create the opening devices directly onto the web of packaging material 103. The molding process ensures that the opening device 105 fits securely with the packaging material, maintaining product integrity and ensuring that the contents remain sealed until opened by the consumer.

The injection molding is performed at an injection molding station of the packaging machine 100. As the web of packaging material 103 is intermittently moved through the injection molding station, it is aligned so that the injection molding module 202 can mold the opening devices 105 at the perforated and/or weakened areas on the web of packaging material 103 at which the opening devices 105 are to be molded. The web of packaging material 103 is supported and held in place by clamps or other mechanisms to ensure precise positioning. In order to maintain product integrity and ensuring that the contents remain sealed until opened by the consumer the alignment of the injection molding module 202 and the web of packaging material 103 is important. The present invention is directed towards achieving such alignment.

The injection molding module 202 is part of an injection molding system 200. With reference to Fig. 2 the injection molding system 200 will be discussed in more detail. Besides the injection molding module 202, the injection molding system 200 comprises control circuitry 210 configured to control functions of the injection molding system 200. The injection molding system 200 may further comprise a camera 230. The camera being configured to capture images 300 of already injection molded opening devices 105 on the web of packaging material 103. The camera 230 is arranged downstream of the injection molding module 202 as seen in a traveling direction of the web of packaging material 103. The camera 230 may be configured to capture the images 300 in grey scale.

The control circuitry 210 is configured to carry out overall control of functions and operations of the injection molding system 200. The control circuitry 210 may include a processor 212, such as a central processing unit, CPU, microcontroller, or microprocessor. The processor 212 may be configured to execute program code stored in a memory 220, in order to carry out functions and operations of the injection molding system 200.

The memory 220 may be a non-transitory computer-readable storage medium. The memory 220 may comprise one or more of a buffer, a flash memory, a hard drive, a removable media, a volatile memory, a non-volatile memory, a random access memory RAM, or another suitable device. In a typical arrangement, the memory 220 may include a non-volatile memory for long term data storage and a volatile memory that functions as system memory for the injection molding system 200. The memory 220 may exchange data with the processor 212 over a data bus.

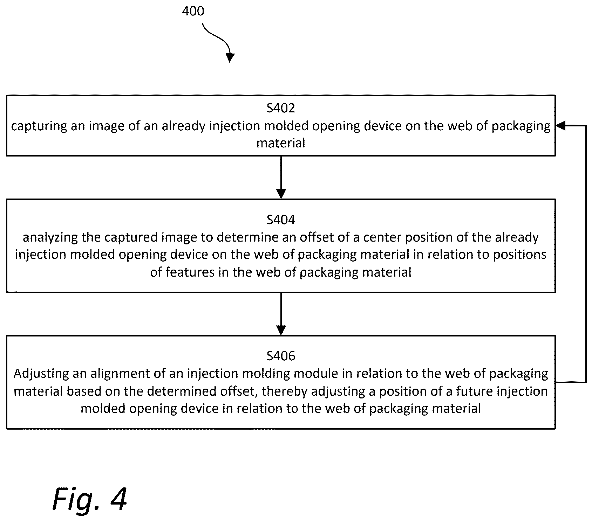

Functions and operations of the injection molding system 200 may be implemented in the form of executable logic routines, e.g., lines of code, software programs, etc., that are stored on a non-transitory computer readable recording medium, e.g., the memory 220, of the injection molding system 200 and are executed by the control circuitry 210, e.g. using the processor 212. Put differently, when it is stated that the control circuitry 210 is configured to perform a specific operation, or execute a specific function, the processor 212 of the control circuitry 210 may be configured execute program code portions stored on the memory 220, wherein the stored program code portions correspond to the specific operation or function. Furthermore, the functions and operations of the control circuitry 210 may be a stand-alone software application or form a part of a software application that carries out additional tasks related to the control circuitry 210. The described functions and operations may be considered a method that the corresponding device is configured to carry out, such as the method 400 that will be discussed below in connection with Fig. 4. Also, while the described functions and operations may be implemented in software, such functionality may as well be carried out via dedicated hardware or firmware, or some combination of one or more of hardware, firmware, and software. The following operations may be performed by the injection molding system 200, and may be stored as functions on a non-transitory computer readable recording medium.

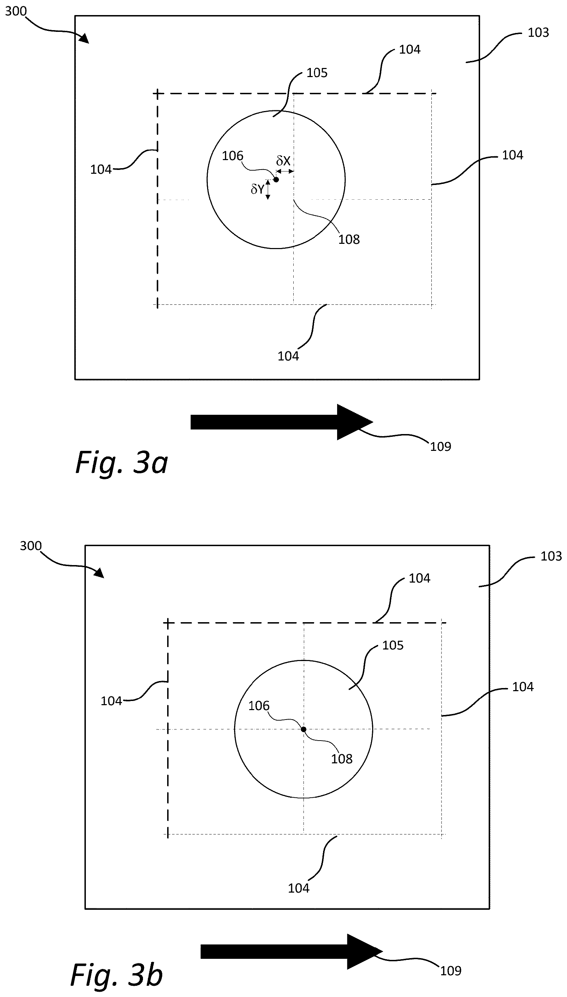

The control circuitry 210 is configured to execute an offset function 222. The offset function 222 has images 300 of already injection molded opening devices 105 on the web of packaging material 103 as input. Hence, the offset function 222 is configured to analyze images 300 of already injection molded opening devices 105 on the web of packaging material 103. Schematic examples of such images 300 are illustrated in connection with Figs 3a and 3b. The images 300 are captured by the camera 230. In the image 300 of Fig. 3a a relatively large offset, δX, δY, is illustrated. Such offset, δX, δY, is an indication of that the alignment of the injection molding module 202 and the web of packaging material 103 is to be improved. In the image 300 of Fig. 3b the offset, δX, δY, is negligible. This is an indication of that the alignment of the injection molding module 202 and the web of packaging material 103 is ok. The offset function 222 is configured to determine the offset, δX, δY, of a center position 106 of an already injection molded opening device 105 on the web of packaging material 103 in relation to positions of features 104 in the web of packaging material 103. The offset, δX, δY, being determined in the plane of the packaging material. δX is the offset in a direction parallel to a packaging material flow direction 109. δY is the offset in a direction orthogonal to the packaging material flow direction 109. The offset, δX, δY, may be determined from data from a single image 300, i.e. data related to a single already injection molded opening devices 105. Alternatively, the offset, δX, δY, may be determined from data from a plurality of images 300, i.e. data related to a plurality of already injection molded opening devices 105.

The offset function 222 may be configured to analyze the captured image 300 by identifying crease lines of the web of packaging material as the features 104 in the web of packaging material 103. The crease lines are defining a final shape of the package to be produced. The pre-prepared perforated and/or weakened areas at which the opening devices 105 are to be molded are oriented in relation to the crease lines, i.e. the features 104, in the web of packaging material 103.

The offset function 222 may be configured to apply an image filter to the image 300. This in order to enhance the features 104, e.g. the crease lines, in the web of packaging material 103 as depicted in the image 300. The image filter is preferably a static filter. Static filtering in the context of image filtering refers to the application of a fixed, unchanging filter to an image. Unlike dynamic or adaptive filters, which adjust based on the content or context of the image, static filters operate uniformly across the entire image using a predefined kernel or transformation. The term "static" indicates that the filter's parameters, such as a kernel size and values, do not change in response to local variations in the image. The static filter may be a linear filter such as a sharpening filter (e.g. a Laplacian filter) and/or an edge detection filter (e.g. a Sobel, a Prewitt, or a Canny filter).

The offset function 222 may further be configured to apply a line-detector to identify the features 104 in the form of the crease lines. Such a line-detector may e.g. be a Hough transform.

The offset function 222 may further be configured to determine a center 108 of a rectangle defined by the crease lines. **If** so, the offset, δX, δY, of the center position 106 of the already injection molded opening device 105 on the web of packaging material 103 in relation to features 104 in the web of packaging material 103 may be set to be an offset between the center position 106 of the already injection molded opening device 105 on the web of packaging material 103 and the center 108 of the rectangle defined by the crease lines.

The offset function 222 may be configured to identify the center position 106 of the already injection molded opening device 105 by identifying a center of a circular main body of the opening device. The center position 106 may be found by identifying a circle inside the main body of the opening device 105. The circle found may be a circular external border of the opening device 105, a circular membrane inside the opening device 105 and/or a circle of an opening of the opening device 105. This circle detector may be a line detector for circles like a Hough Circle Transform. **It** is readily understood that the instead of being circular the shape of the opening device 105 may have another distinguishing shape such as oval, rectangular or any other shape. A center position 106 of such shape may be found by identifying such shape and determining the center thereof.

The control circuitry 210 is configured to execute an adjusting function 224. The adjusting function 224 is configured to adjust the alignment between the injection molding module 202 and the web of packaging material 103. Especially, the adjustment is made in a plane parallel to the web of packaging material 103. The adjustment of the alignment between the injection molding module 202 and the web of packaging material 103 is based on the determined offset, δX, δY. Performing such adjustment, a position of a future injection molded opening device 105 in relation to the web of packaging material 103 will be adjusted. The adjusting function 224 may be configured to adjust the orientation of the injection molding module 202 in relation to the web of packaging material 103 on a condition that the offset, δX, δY, is above a tolerance threshold. The tolerance threshold may be set to be ± 0.2mm in the δX and δY directions, respectively. By having a tolerance, minor adjustments may be avoided. By this unnecessary correction of the web of packaging material 103 and/or the injection molding module 202 may be avoided.

The adjustment of the alignment between the injection molding module 202 and the web of packaging material 103 may be made in various ways. Typically, the web of packaging material 103 is moved to achieve the adjustment of the alignment. Alternatively, or in combination, the injection molding module 202 may be moved to achieve the adjustment of the alignment. According to one specific embodiment, the injection molding module 202 is fixedly arranged in relation to the packaging machine 100 and the web of packaging material 103 is steered within the packaging machine 100 in order to achieve the adjustment of the alignment between the injection molding module 202 and the web of packaging material 103. The movement and/or steering of the web of packaging material 103 and/or the injection molding module 202 may be performed based on an adjustment signal issued by the adjusting function 224. Such adjustment signal may be directed towards a control system of the packaging machine 100 and/or towards an adjustment means of the injection molding module 202.

**In** connection with Fig. 4 a method 400 of adjusting an alignment of an injection molding module 202 in relation to a web of packaging material 103 will be discussed. As discussed above, the injection molding module 202 is configured to injection mold opening devices 105 onto the web of packaging material 103. Below, the different steps of the method 400 are described in more detail. Even though illustrated in a specific order, the steps of the method 400 may be performed in any suitable order, in parallel, as well as multiple times. Typically the steps of the method 400 is performed using an injection molding system 200 arranged within a packaging machine, e.g. the injection molding system 200 and the packaging machine 100 discussed in connection with Fig. 1 and Fig. 2 above. Some of the steps, or even all steps, of the method 400 may be executed by the control circuitry 210 of the injection molding system 200. Some of the steps, or even all steps, of the method 400 may be computer implemented, i.e. some of the steps, or even all steps, of the method may be implemented as a computer code program being executed by the processor 212 of the control circuitry 210 of the injection molding system 200.

The method 400 comprises, capturing S402 an image 300 of an already injection molded opening device 105 on the web of packaging material 103. As discussed above such image is typically captured by the camera 230. **In** order to avoid undue repetition, reference is made to the above discussion of the camera 230 for the capturing of the image 300.

The method 400 further comprises, determining an offset, δX, δY, of a center position 106 of the already injection molded opening device 105 on the web of packaging material 103 in relation to positions of features 104 in the web of packaging material 103. This by analyzing S404 the opening captured image 300. Analyzing S404 the captured image 300 may comprise identifying crease lines of the web of packaging material as the features 104 in the web of packaging material 103. Identifying the crease lines may comprise applying an image filter to enhance the crease lines in the image and applying a line-detector to identify the crease lines. Analyzing S404 the captured image 300 may comprise identifying the center position 106 of the already injection molded opening device 105 by identifying a center of a circular main body of the opening device. The method may further comprises determining a center 108 of a rectangle defined by the crease lines. **If** so the offset, δX, δY, of the center position 106 of the already injection molded opening device 105 on the web of packaging material 103 in relation to features 104 in the web of packaging material 103 may be set to be an offset between the center position 106 of the already injection molded opening device 105 on the web of packaging material 103 and the center 108 of the rectangle defined by the crease lines. The determination of the offset, δX, δY, and the analysis the captured image 300 are discussed in more detail above in connection with the offset function 222, in order to avoid undue repetition, reference is made to the above discussion.

The method 400 further comprises adjusting S406 the alignment of the injection molding module 202 in relation to the web of packaging material 103 based on the determined offset, δX, δY, thereby adjusting a position of a future injection molded opening device 105 in relation to the web of packaging material 103. The step of adjusting S406 the alignment of the injection molding module 202 in relation to the web of packaging material 103 may be performed on a condition that the offset, δX, δY, is above a tolerance threshold. The adjustment of the injection molding module 202 in relation to the web of packaging material 103 is discussed in more detail above in connection with the adjustment function 224, in order to avoid undue repetition, reference is made to the above discussion.

Additionally, variations can be understood and effected by the skilled person in practicing the claimed invention, from a study of the drawings, the disclosure, and the appended claims.

## Claims

1. A method of adjusting an alignment of an injection molding module (202) in relation to a web of packaging material (103), the injection molding module (202) being configured to injection mold opening devices (105) onto the web of packaging material (103), the method comprising the following steps:
capturing (S402) an image (300) of an already injection molded opening device (105) on the web of packaging material (103);
determining an offset (δX, δY) of a center position (106) of the already injection molded opening device (105) on the web of packaging material (103) in relation to positions of features (104) in the web of packaging material (103) by analyzing (S404) the captured image (300); and
adjusting (S406) the alignment of the injection molding module (202) in relation to the web of packaging material (103) based on the determined offset (δX, δY), thereby adjusting a position of a future injection molded opening device (105) in relation to the web of packaging material (103).

2. The method according to claim 1, wherein analyzing (S404) the captured image (300) comprises identifying crease lines of the web of packaging material as the features (104) in the web of packaging material (103).

3. The method according to claim 2, wherein identifying the crease lines comprises applying an image filter to enhance the crease lines in the image and applying a line-detector to identify the crease lines.

4. The method according to claim 2 or 3, further comprising determining a center (108) of a rectangle defined by the crease lines, wherein the offset (δX, δY) of the center position (106) of the already injection molded opening device (105) on the web of packaging material (103) in relation to features (104) in the web of packaging material (103) is set to be an offset between the center position (106) of the already injection molded opening device (105) on the web of packaging material (103) and the center (108) of the rectangle defined by the crease lines.

5. The method according to any one of claims 1-4, wherein analyzing (S404) the captured image (300) comprises identifying the center position (106) of the already injection molded opening device (105) by identifying a center of a circular main body of the opening device.

6. The method according to any one of claims 1-5, wherein the step of adjusting (S406) the alignment of the injection molding module (202) in relation to the web of packaging material (103) is performed on a condition that the offset (δX, δY) is above a tolerance threshold.

7. A non-transitory computer-readable storage medium having stored thereon instructions for implementing the method according to any one of claims 1-6, when executed on a device having processing capabilities.

8. An injection molding system (200) for injection molding opening devices (105) onto a web of packaging material (103), the injection molding system (200) comprising:
an injection molding module (202) configured to injection mold opening devices (105) onto the web of packaging material (103); and
control circuitry (210) configured to execute:
an offset function (222) configured to determine an offset (δX, δY) of a center position (106) of an already injection molded opening device (105) on the web of packaging material (103) in relation to positions of features (104) in the web of packaging material (103) by analyzing an image (300) of an already injection molded opening device (105) on the web of packaging material (103); and
an adjusting function (224) configured to adjust an alignment of the injection molding module (202) in relation to the web of packaging material (103) based on the determined offset (δX, δY), thereby adjusting a position of a future injection molded opening device (105) in relation to the web of packaging material (103).

9. The injection molding system (200) according to claim 8, further comprising a camera (230) configured to capture the image (300) of the already injection molded opening device (105) on the web of packaging material (103).

10. The injection molding system (200) according to claim 8 or 9, wherein the offset function (222) is configured to analyze the captured image (300) by identifying crease lines of the web of packaging material as the features (104) in the web of packaging material (103).

11. The injection molding system (200) according claim 10, wherein the offset function (222) is further configured to apply an image filter to the image (300) of the already injection molded opening device (105) on the web of packaging material (103) to enhance the crease lines and to apply a line-detector to identify the crease lines.

12. The injection molding system (200) according to any one of claims 8-11, wherein the offset function (222) is configured to identify the center position (106) of the already injection molded opening device (105) by identifying a center of a circular main body of the opening device.

13. The injection molding system according to any one of claims 8-12, wherein the adjusting function (224) is configured to adjust the alignment of the injection molding module (202) in relation to the web of packaging material (103) on a condition that the offset (δX, δY) is above a tolerance threshold.

14. A roll feed packaging machine (100) configured to produced packages filled with food product, the produced packages comprising a opening device (105) for accessing the food product, the roll feed packaging machine (100) comprising:
a feeder (102) for feeding a web of packaging material (103); and
an injection molding system (200) according to any one of claims 8 to 13.

15. The roll feed packaging machine (100) according to claim 14, further comprising a reel (101) comprising the web of packaging material (103), wherein the packaging material (103) comprises pre-prepared crease lines.
